# EUROPEAN PATENT SPECIFICATION

(11) **EP 0 363 369 B1**
(45) Date of publication and mention of the grant of the patent: **01.09.1993**
(21) Application number: 88902863.5
(22) Date of filing: 29.03.1988
(51) Int. Cl.: B01D 29/96

(54) **SELF-OPERATED DRUM FILTER AND METHOD FOR THE FILTRATION OF WATER**
SELBSTTÄTIGES TROMMELFILTER UND VERFAHREN ZUR FILTRATION VON WASSER
FILTRE A TAMBOUR A FONCTIONNEMENT AUTONOME ET PROCEDE DE FILTRAGE DE L'EAU

(30) Priority: 03.04.1987 FI 871465
(43) Date of publication of application: 18.04.1990
(73) Proprietor: KEMIJOKI OY, SF-96100 Rovaniemi 10 (FI)
(72) Inventor: NISKALA, Lauri, Olavi, SF-96900 Rovaniemi (FI)
(74) Representative: Müller, Enno, Dipl.-Ing.
(86) International application number: FI8800044
(87) International publication number: WO8807401

(56) References cited:
- EP-A- 253 367
- GB-A- 2 007 105

## Description

The present invention relates to a self-operated drum filter, according to the preamble of claim 1.

The invention relates further to a water filtration method according to the preamble of claim 5.

In water-operated processes, it is often necessary to filter the water one way or another. One quite common filter is a circular drum with debris remaining on its periphery and being removed from time to time by rotating the drum by means of a separate driving gear while the flushing is effected with a water stream created by a pump or pressure difference. This type of filter is usually expensive and quite complicated because of its driving gear.

An object of the invention is to eliminate the above problems and in order to accomplish this, a filter of the invention is provided with the features of the characterizing clause of claim 1.

Furthermore, as to the filtration method, according to the invention the features as to the characterizing clause of claim 5 are provided.

The invention will now be described with reference made to the accompanying drawings, in which:
- Fig. 1: shows longitudinal section of a drum filter of the invention, and
- Fig. 2: shows the drum filter of fig. 1 along section II-II.

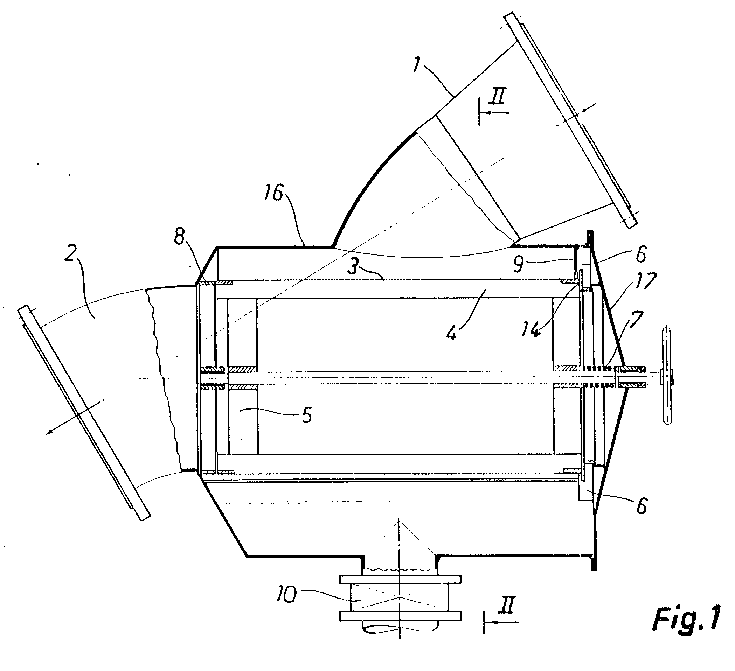

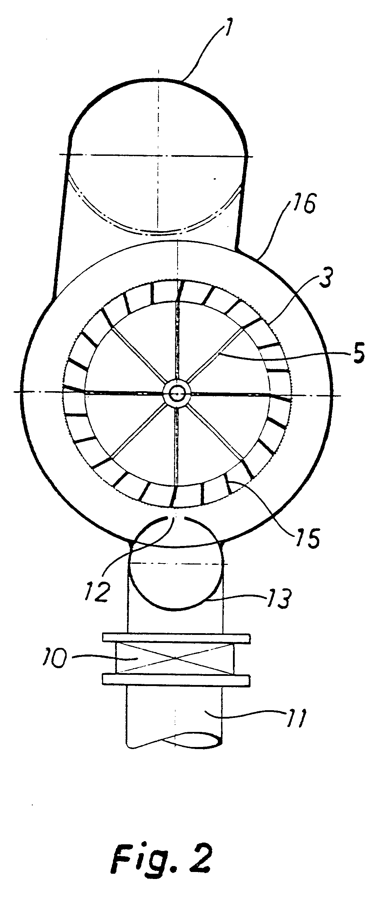

As shown in figs. 1 - 2, the drum filter comprises a pressure-proof body 16 provided with an inlet pipe 1, an outlet pipe 2 and a drain pipe 11. Inside said body 16 is journalled a rotating drum 4 provided with a filter surface 3. The drum 4 is further provided with preferably inclined vanes 15 for providing a rotation motion and back-up vanes 5 as well as with a flange 14 which together with a gable 17 of body 16 builds an annular space 6. The annular space 6 is in communication with a space surrounding the drum by way of a slice 12 in a connecting pipe 13, whereby said connecting pipe 13 is in communication with the drain pipe 11. The filter is further provided with means for retaining the rotation motion of drum 4, comprising preferably a retaining ring 8 and 9 as well as a spring 7. In addition, the filter is fitted with a drain valve 10, controlled by a pressure-difference switch and whereby water can discharge into a drain pipe 11 during the cleaning operation.

The drum filter operates so that the water coming in from inlet pipe 1 is passed through filter surface 3 inside drum 4 and further into outlet pipe 2. The pressure of intake water prevails by way of slice 12 of pipe 13 in annular space 6 whreby, as a result of a pressure loss occuring in the filter, a pressure difference develops between the opposite sides of flange 14 which together with spring 7 causes drum 4 to push itself against retaining rings 8, 9 to prevent rotation of the drum. As drum 4 is not rotating, the circulation adopted by water is linearized by the action of back-up vanes 5 to provide a more uniform flow into outlet pipe 2. As the filter surface becomes soiled, a pressure difference increases between the opposite sides of flange 14 until, when the pressure difference reaches a predetermined value, a pressure-difference switch causes the opening of a drain valve 10, some of the water passing into drain pipe 11 through slice 12 and pressure of the water in annular space 6 decreasing and the direction of pressure difference reversing with a result that drum 4 detaches itself from retaining rings 8, 9. Thus, drum 4 is set in rotation due to a turbine effect created on inclined vanes 15. The rotation motion is further intensified by a turbine effect generated on back-up vanes 5 by the water flowing into outlet pipe 2. The cleaning of filter surface 3 is based on a vigorous suction prevailing in slice 12 as well as on a centrifugal force created by rotating motion. As the pressure loss caused by filter surface 3 again decreases after a flushing operation, said drain valve 10 closes and, thus, the pressure in annular space 6 increases to be equal to the inlet pressure and the direction of pressure difference across flange 14 reverses and drum 4, assisted by spring 7, sets against retaining rings 8 and 9 and is locked in its position again. Following this, the filter operates stationary until a pressure loss caused by soiling reaches again a preset value and the above-described flushing operation is repeated.

A drum filter of the invention can be installed in various water pipings in various sizes and provided with various pressures and various filter surfaces. A separate braking gear can also be used, especially in major units and when compressed air is available.

## Claims

1. A self-operated drum filter, comprising a pressureproof body (16) with its inlet (1), outlet (2) and drain pipe (11) as well as a rotating drum (4) which is journalled inside said body (16) and provided with a filter surface (3), the filter being fitted with a drain valve (10) controlled by a pressure-difference switch, **charactarized** in that said drum (4) is axially moveable, said drum (4) being provided with a flange (14) which, together with a gable (17) of the body (16), builds an annular space (6) which is in communication with a space surrounding said drum (4) by way of a slice (12) in a connecting pipe (13), whereby said connecting pipe (13) is in communication with the drain pipe (11), said drum (4) further being fitted with vanes (15) for setting the drum in rotating motion, and that the filter is further provided with retaining rings (8, 9), against which the drum (4) is axially moved by means of pressure difference developed between the opposite sides of the flange (14) to prevent rotation of the drum (4), and that the filter further comprises a spring (7) to assist said axial movement of the drum (4).

2. A drum filter as set forth in claim 1, **charact erized** in that said vanes are installed in a position different from the radial direction of drum (4)

3. A drum filter as set forth in any of claims 1 or 2, **characterized** in that said drum (4) is fitted with back-up vanes (5).

4. A drum filter as set forth in claim 4 **charact erized** in that said back-up vanes are installed to extend in the radial direction of drum (4).

5. A method for the filtration of water using a self-operated drum filter as set forth in any of claims 1 to 4, wherein water supplied from an inlet pipe (1) is passed through a filter surface (3) inside a drum (4) and further into an outlet pipe (2), **characterized** in that the cleaning of a filter is adapted to be self-operated in a manner that the pressure of intake water prevails in an annular space (6), whereby a pressure difference created as a result of a pressure loss occurring in the filter between the opposite sides of a flange (14), together with a spring (7), causes said drum (4) to push itself against retaining rings (8, 9) so as to prevent rotation of the drum until, as the pressure difference increases to a predetermined value, a drain valve (10) opens by the action of a pressure-difference switch whereby, as some of the water passes into a drain pipe (11), through a slice (12) in a connection pipe (13), the pressure drops in annular space (6) and the direction of pressure difference reverses with a result that drum (4) separates itself from the retaining rings (8, 9), said drum (4) beginning its rotation due to a turbine effect created on vanes (5, 15) to effect the cleaning of filter surface (3).

6. A water-filtration method as set forth in claim 5, **c haracterized** in that the circulation adopted by water is linearized during the filtering operation by means of back-up vanes (5) for reducing the turbulence of water flowing into said outlet pipe (2).

## Patentansprüche

1. Ein selbsttätiges Trommelfilter, aufweisend einen druckfesten Körper (16) mit einer Einlaß- (1), einer Auslaß- (2) und einer Abflußleitung (11), des weiteren mit einer drehenden Trommel (4), welche innerhalb des Körpers (16) gelagert ist und mit einer Filterfläche (3) versehen ist, wobei das Filter mit einem Ablaßventil (10) verbunden ist, das durch einen Druckdifferenzschalter gesteuert ist, dadurch gekennzeichnet, daß die Trommel (4) axial bewegbar ist, wobei die Trommel (4) mit einem Flansch (14) versehen ist, welcher, zusammen mit einem Giebel (17) des Körpers (16), einen kreisringförmigen Raum (6) bildet, der in Verbindung steht mit einem die Trommel (4) umgebenden Raum aufgrund eines Einschnittes (12) in einer Verbindungsleitung (13), wobei die Verbindungsleitung (13) in Verbindung ist mit der Ablaßleitung (11), wobei die Trommel (4) weiter ausgerüstet ist mit Schaufeln (15), um die Trommel in Drehbewegung zu versetzen, und daß das Filter weiter mit Rückhalteringen (8, 9) versehen ist, gegen welche die Trommel (4) axial mit Hilfe einer Druckdifferenz, die sich zwischen gegenüberliegenden Seiten des Flansches (14) entwickelt, bewegt wird, um eine Drehung der Trommel (4) zu verhindern, und daß das Filter weiter eine Feder (7) aufweist, um die Axialbewegung der Trommel hier zu unterstützen.

2. Trommelfilter nach Anspruch 1, dadurch gekennzeichnet, daß die Schaufeln in einer Stellung eingebaut sind, welche unterschiedlich ist von der Radialrichtung der Trommel (4).

3. Trommelfilter nach einem der Ansprüche 1 oder 2, dadurch gekennzeichnet, daß die Trommel (4) mit Hilfsschaufeln (5) ausgerüstet ist.

4. Trommelfiter nach Anspruch 3, dadurch gekennzeichnet, daß die Hilfsschaufeln so eingebaut sind, daß sie sich in Radialrichtung der Trommel (4) erstrecken.

5. Verfahren zur Filterung von Wasser unter Verwendung eines selbsttätigen Trommelfilters nach einem der Ansprüche 1 bis 4, wobei Wasser von einer Einlaßleitung (1) durch eine Filterfläche (3) innerhalb der Trommel (4) und weiter in eine Auslaßleitung (2) geleitet wird, dadurch gekennzeichnet, daß die Reinigung eines Filters selbsttätig eingerichtet ist in einer solchen Weise, daß der Druck des Einlaßwassers vorherrscht in einem kreisringförmigen Raum (6), wobei eine Druckdifferenz, erzeugt als ein Ergebnis eines Druckverlustes, der in dem Filter zwischen entgegengesetzten Seiten eines Flansches (14) auftritt, zusammen mit einer Feder (7) bewirkt, daß die Trommel (4) sich selbst gegen die Rückhalteringe (8, 9) drückt, um so eine Drehung der Trommel zu verhindern bis, wenn die Druckdifferenz auf einen vorbestimmten Wert ansteigt, ein Ablaßventil (10) öffnet durch Wirkung eines Druckdifferenzschalters, wodurch, da einiges Wasser in die Ablaßleitung (11) strömt, durch einen Einschnitt (12) in einer Verbindungsleitung (13), der Druck in dem kreisringförmigen Raum (6) abfällt und die Richtung der Druckdifferenz sich umkehrt mit dem Ergebnis, daß die Trommel (4) sich selbst von den Rückhalteringen (8, 9) löst, wobei die Trommel (4) ihre Drehung beginnt aufgrund eines Turbineneffektes, der in den Schaufeln (5, 15) erzeugt wird, um die Reinigung der Filterfläche (3) zu bewirken.

6. Verfahren zur Wasserfiltration nach Anspruch (5), dadurch gekennzeichnet, daß der durch das Wasser angenommene Kreislauf während des Filterbetriebs mit Hilfe der Hilfsschaufeln (5) linearisiert wird, um die Turbulenz des Wassers, das in die Auslaßleitung (2) strömt zu vermindern.

## Revendications

1. Un filtre à tambour à fonctionnement autonome comprenant un corps étanche à la pression (16), ayant une entrée (1), une sortie (2), un tuyau de vidange (11), ainsi qu'un tambour rotatif (4) monté à rotation à l'intérieur dudit corps (16), et comportant une surface de filtrage (3), le filtre étant équipé d'une valve de vidange (10) commandée par un commutateur à pression différentielle, caractérisé en ce que ledit tambour (4) est susceptible de se déplacer axialement, ledit tambour (4) comportant une bride (14) qui, en combinaison avec une flasque de bordure (17) du corps (16), définit un espace annulaire (6) qui se trouve en communication avec un espace entourant ledit tambour (4) par l'intermédiaire d'une découpe (12) dans un tube de raccordement (13), réalisé de manière que ledit tube de raccordement (13) en communication avec le tube de vidange (11), ledit tambour (4) étant muni, en outre, d'aubages (15) pour entraîner le tambour en rotation, et en ce que le filtre est muni, en outre, de bagues de retenue (8, 9) contre lesquelles le tambour (4) est déplacé axialement par la différence de pression qui se développe entre les faces opposées de la bride (14) pour empêcher la rotation du tambour (4), et en ce que le filtre comporte, en outre, un ressort (7) pour aider audit déplacement axial du tambour (4).

2. Un filtre à tambour selon la revendication 1, caractérisé en ce que lesdits aubages sont installés dans une position différente de la direction radiale du tambour (4).

3. Un filtre à tambour selon l'une quelconque des revendications 1 ou 2, caractérisé en ce que ledit tambour (4) est muni d'aubages d'entraînement en rotation (5).

4. Un filtre à tambour selon la revendication 4, caractérisé en ce que lesdits aubages d'entraînement en rotation sont installés de manière à s'étendre dans la direction radiale du tambour (4).

5. Un procédé pour la filtration de l'eau utilisant un filtre à tambour à fonctionnement autonome selon l'une quelconque des revendications 1 à 4, dans lequel l'eau fournie à partir d'un tube d'entrée (1) traverse une surface de filtrage (3) à l'intérieur d'un tambour (4), et en outre passe dans un tube de sortie (2), caractérisé en ce que le nettoyage du filtre est susceptible d'être réalisé de façon autonome, de telle manière que la pression de l'eau entrante soit supérieure dans un espace annulaire (6), de manière qu'une différence de pression créée par suite de la perte de charge se produisant dans le filtre entre les faces opposées d'une bride (14), en même temps que l'action d'un ressort (7) oblige ledit tambour à se pousser lui-même contre les bagues de retenue (8, 9), de façon à empêcher la rotation du tambour jusqu'à ce que, la différence de pression ayant augmenté jusqu'à une valeur prédéterminée, une valve de vidange (10) s'ouvre sous l'action d'un commutateur à pression différentielle, de manière qu'une partie de l'eau s'écoule dans un tube de vidange (11), à travers une découpe (12) dans un tube de raccordement (13), que la pression diminue dans l'espace annulaire (6) et que le sens de la différence de pression s'inverse avec pour résultat que le tambour (4) se sépare de lui-même des bagues de retenue (8, 9), ledit tambour (4) commençant à tourner par suite d'un effet de turbine créé sur des aubages (5, 15) pour effectuer le nettoyage de la surface de filtrage (3).

6. Un procédé de filtration d'eau selon la revendication 5, caractérisé en ce que le trajet d'écoulement de l'eau est rendu linéaire (laminaire) au cours de l'opération de filtrage à l'aide d'aubages d'entraînement en rotation (5) pour réduire la turbulence de l'eau s'écoulant dans ledit tube de sortie (2).
